# EUROPÄISCHE PATENTSCHRIFT

(11) **EP 0 716 394 B1**
(45) Veröffentlichungstag und Bekanntmachung des Hinweises auf die Patenterteilung: **04.07.2001**
(21) Anmeldenummer: 95119306.9
(22) Anmeldetag: 07.12.1995
(51) Int. Cl.: G06K 19/077

(54) **Elektronisches Modul und Datenträger mit elektronischem Modul**
Electronic module and record carrier with electronic module
Module électronique et support d'information à module électronique

(30) Priorität: 08.12.1994 DE 4443767
(43) Veröffentlichungstag der Anmeldung: 12.06.1996
(73) Patentinhaber: Giesecke & Devrient GmbH, 81677 München (DE)
(72) Erfinder: Haghiri, Yahya, D-80797 München (DE); Barak, Renée-Lucia, D-82008 Unterhaching (DE)
(74) Vertreter: Klunker . Schmitt-Nilson . Hirsch

(56) Entgegenhaltungen:
- EP-A- 0 527 438
- US-A- 5 005 282
- US-A- 5 057 460
- PATENT ABSTRACTS OF JAPAN vol. 014, no. 177 (M-0960), 9.April 1990 & JP 02 030598 A (DAINIPPON PRINTING CO LTD), 31.Januar 1990,

## Beschreibung

Die Erfindung betrifft ein elektronisches Modul mit einer Metallschicht, in der durch Unterbrechungen ein Kontaktlayout mit voneinander isolierten Kontaktflächen ausgebildet ist, und das zwei Bereiche aufweist, nämlich einen Zentralbereich, in dem ein integrierter Schaltkreis und leitende Verbindungen vom Schaltkreis zu den Kontaktflächen liegen, wobei der Schaltkreis und die Verbindungen von einer Gußmasse umgeben sind und einen äußeren Bereich, der weitgehend frei von Gußmasse ist. Die Erfindung betrifft ferner einen Datenträger mit einem derartigen elekronischen Modul.

Module der vorgenannten Art sind z. B. aus der US-A 5,005,282 bekannt und werden allgemein als Leadframemodule bezeichnet Zur Herstellung wird dabei ein Metallband (Leadframe) bereitgestellt, in dem ein Kontaktlayout mit voneinander isolierten Kontaktflächen erzeugt wird, wobei die Kontaktflächen zunächst über Stege mit dem Metallband verbunden bleiben. Danach werden über die äußeren Bereiche des Kontaktlayouts Klebestreifen sowie im Zentralbereich ein integrierter Schaltkreis aufgebracht, der leitend mit den Kontaktflächen verbunden wird. Nachfolgend werden der Schaltkreis und die leitenden Verbindungen zum Schutz vor mechanischen Belastungen mit einer Gußmasse vergossen. Schließlich wird das Modul aus dem Metallband herausgetrennt. Das Herauslösen aus dem Metallband wird dabei durch die Isolierstreifen unterstützt, welche die Modulstruktur, insbesondere die äußeren Bereiche der Metallschicht, verstärken.

Ein elektronisches Modul mit einer Metallschicht, in der durch Unterbrechungen ein Kontaktlayout mit voneinander isolierten Kontaktflächen ausgebildet ist, wobei sich an der Unterseite des Zentralbereiches des Kontaktlayouts ein von Gußmasse umgebendes integrierter Schaltkreis befindet, ist auch aus der US-A 5,057,460 bekannt. Dieses Dokument offenbart die Merkmale des Oberbegriffs der Ansprüche 1 Zur Unterstützung der Modulfertigung sind in der das Kontaktflächenlayout enthaltenden Metallschicht Fenster angelegt, welche dazu dienen, beim nachfolgenden Vergießen das Ausfüllen der Gußform mit Gußmaterial zu erleichtern. Die Fenster selbst werden dabei durch Gußmaterial verfüllt.

Aus der EP-A 0 527 438 ist ein elektronisches Modul entnehmbar, welches auf einer Trägerfolie basiert, auf deren einer Seite ein Schaltkreisbaustein angeordnet ist und auf deren anderer Seite sich Kontaktflächen des Schaltkreises befinden. Das Modul wird mittels einer Kleberschicht in der Ausnehmung eines Kartenkörpers befestigt, wobei am Rand der Ausnehmung eine seitlich umlaufende Rille ausgebildet ist, in welche überschüssiger Klebstoff beim Einbringen des Moduls in den Kartenkörper ausweichen kann. Die dabei in der Rille entstehende Klebstoffwulst verhindert das Auftreten hoher Kerbspannungen an der Grenzfläche zwischen Kartenkörper und Klebstoff bei Ausübung von Biegebelastungen auf einen fertiggestellten Datenträger.

Module der vorbeschriebenen Art finden vor allem in Datenträgern Verwendung, welche z. B. als Telefonkarte, Bankkarte etc. dienen. Als solche sind sie im täglichen Gebrauch starken mechanischen Belastungen, insbesondere Biegebelastungen, ausgesetzt. Derartige Belastungen können sich vom äußeren Bereich auf den Zentralbereich des Moduls übertragen und dort beispielsweise zu einem Bruch des integrierten Schaltkreises oder zu einem Abriß der leitenden Verbindungen vom Schaltkreis zu den Kontaktflächen und damit zu einem Funktionsausfall des Datenträgers führen. Letzteres kann z. B. dadurch ausgelöst werden, daß sich durch Biegebelastungen die Gußmasse des Moduls am Übergang vom äußeren zum inneren Bereich löst, da dort nur eine unzureichende Verbindung zwischen der Vergußmasse und dem Kontaktlayout besteht.

Ein besser zur Aufnahme von Biegebelastsungen geeignetes Modul ist aus der JP-A 02030598 bekannt. Eine Metallschicht mit einem Kontaktlayout befindet sich dabei an der Unterseite eines Substrates. Auf dessen Oberseite ist eine weitere, ebenfalls ein Kontaktlayout enthaltende Metallschicht angeordnet. Das das Modul tragende Substrat liegt auf einem Verstärkungsrahmen auf, der seinerseits mit einem Kartenkörper verbunden ist. In dem Verstärkungsrahmen sind Nuten zur Aufnahme von Biegekräften angelegt. In einem fertiggestellten Datenträger schützen diese Nuten das Modul vor mechanischen Belastungen. Das vorgeschlagene Modulkonzept ist allerdings aufwendig und erfordert eine Vielzahl von Herstellungsschritten.

Aufgabe der Erfindung ist es vor diesem Hintergrund, ein Leadframemodul zum Einbau in einen Datenträger anzugeben, das einen einfachen Aufbau besitzt, jedoch trotzdem gut vor im Rahmen des täglichen Gebrauchs eines Datenträgers auftretenden Belastungen geschützt ist.

Die Aufgabe wird gelöst durch ein elektronisches Modul mit den Merkmalen des Anspruchs 1 und das Verfahren nach Anspruch 16. Bei einem erfindungsgemäßen elektronischen Modul wird durch vergleichsweise einfache, nur an der den Leadframe bildenden Metallschicht vorzunehmenden Maßnahmen eine weitgehende mechanische Entkopplung zwischen dem äußeren Bereich des Moduls, der das Kontaktlayout enthält und zur Verbindung des Moduls und dem Datenträger dient, und dem Zentralbereich, der die empfindlichen Bestandteile aufnimmt und durch die Gußmasse relativ starr ausgebildet ist, erreicht. Die dazu notwendigen Maßnahmen können beispielsweise darin bestehen, daß der äußere Bereich des Moduls mit Stanzzungen oder Perforationen versehen wird.

Die mit der Erfindung erzielten Vorteile sind insbesondere darin zu sehen, daß man ein Leadframe-Modul erhält, das auch starken Biegebelastungen standhält. Das Modul ist einfach und praktisch ohne Mehraufwand zu fertigen, da die Entlastungsstanzungen bzw. Perforationen etc. im äußeren Bereich des Moduls bereits bei der Herstellung des Kontaktlayouts oder aber bei der Durchstanzung der Stege, die das Kontaktlayout zunächst noch mit dem Metallband verbinden, erzeugt werden können. Schließlich kann das erfindungsgemäße Modul ohne Änderung der Einbaumethoden in den Datenträger eingesetzt und dort befestigt werden.

Gemäß einem Ausführungsbeispiel der Erfindung werden bei der Erzeugung des Kontaktlayouts im Metallband gleichzeitig in dessen äußerem Bereich Fenster erzeugt. Hierbei wird die Lage der Fenster so gewählt, daß diese beim fertiggestellten Modul in unmittelbarer Nähe des Zentralbereichs bzw. der Gußmasse des Moduls liegen. Dadurch kann eine nahezu optimale Entkopplung zwischen dem äußeren Bereich, der der Verklebung des Moduls im Datenträger dient, und dem Zentralbereich des Moduls, der die empfindlichen Bestandteile enthält, erreicht werden.

Gemäß einer ersten Weiterbildung der Erfindung wird das Metallband einer speziellen Vorbehandlung unterzogen, durch die ein besserer Verbund zwischen dem Kontaktlayout und der Gußmasse erreicht werden kann, so daß sich die Gußmasse bei Biegebelastungen des Datenträgers nicht so schnell vom Kontaktlayout löst. Dies kann beispielsweise durch eine Plasmavorbehandlung oder eine Behandlung mit Sandstrahlen erfolgen.

Gemäß einer weiteren Weiterbildung der Erfindung wird das elektronische Modul mit Hilfe einer flexiblen Klebeschicht mit dem Datenträger verklebt, die bei Biegebelastungen des Datenträgers auftretende mechanische Belastungen weitgehend absorbieren kann.

Weitere Ausführungsbeispiele und Vorteile der Erfindung werden in Zusammenhang mit den nachstehenden Figuren erläutert, darin zeigt:
- Fig. 1: einen Datenträger mit Leadframe-Modul in Aufsicht,
- Fig. 2: den Datenträger der Fig. 1 im Querschnitt,
- Fig. 3: ein Metallband mit Kontaktlayout in Aufsicht,
- Fig. 4: ein Metallband mit Kontaktlayout in Aufsicht,
- Fig. 5: ein Metallband mit Kontaktlayout in Aufsicht,
- Fig. 6: einen gebogenen Datenträger im Querschnitt,
- Fig. 7: ein Leadframe-Modul in einer Gußform,
- Fig. 8: ein Leadframe-Modul,
- Fig. 9: das Leadframe-Modul aus Fig. 8 mit aufgebrachter Klebeschicht,
- Fig. 10: einen Datenträger im Querschnitt.
- Fig. 11 und 12: Weiterbildungen eines Datenträgers gemäß Fig. 1, 2, 6 und 10 im Querschnitt

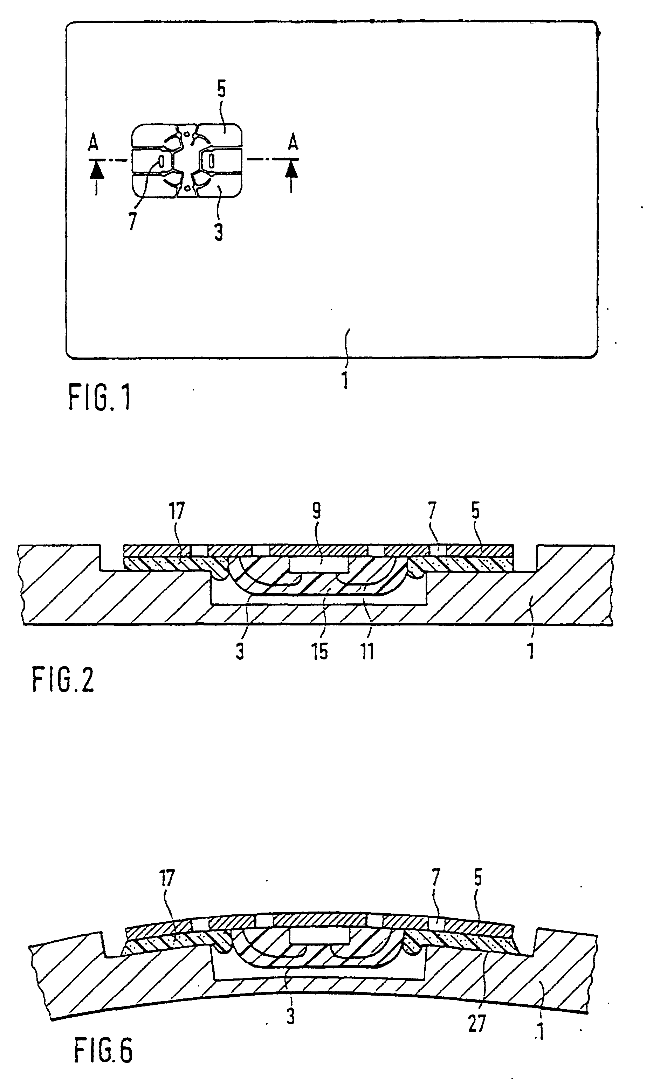

Fig. 1 zeigt vergrößert und nicht maßstabsgecreu einen Datenträger 1 mit einem erfindungsgemäßen elektronischen Modul 3 in Aufsicht. In der Metallschicht des elektronischen Moduls ist durch Unterbrechungen ein Kontaktlayout mit Kontaktflächen 5 ausgebildet. Innerhalb der Kontaktflächen 5 sind einzelne Fenster 7 vorgesehen, deren Funktion im Zusammenhang mit der Fig. 2 erläutert wird.

Fig. 2 zeigt einen Querschnitt entlang der in der Fig. 1 gezeigten Linie A - A. Das elektronische Modul 3 läßt sich in zwei Bereiche aufteilen, nämlich in einen Zentralbereich und in einen äußeren Bereich. Im Zentralbereich ist der integrierte Schaltkreis 9 aufgebracht und z.B. mittels Bonddrähten 11 leitend mit den Kontaktflächen 5 verbunden. Zum Schutz vor mechanischen Belastungen sind der integrierte Schaltkreis 9 und die Bonddrähte 11 mit einer Gußmasse 15 umgossen. Der Zentralbereich enthält also die empfindlichen Bestandteile des elektronischen Moduls 3 (nämlich den integrierten Schaltkreis und die leitenden Verbindungen vom Schaltkreis zu den Kontaktflächen) und ist relativ starr ausgebildet.

Der äußere Bereich des Moduls 3 besteht ausschließlich aus der dünnen Metallschicht und dient der Verbindung des Moduls mit dem Datenträger. Dazu wird auf diesem Bereich z.B. eine Klebeschicht 17 aufgebracht, mit deren Hilfe das elektronische Modul 3, wie in Fig. 2 gezeigt, in einer Aussparung des Datenträgers eingeklebt wird. Die Klebeschicht 17 ragt zum Teil auf die Gußmasse 15 und dichtet die Aussparung, in der das Modul 3 liegt, nach außen hin ab. Somit kann, beispielsweise durch die Unterbrechungen im Kontaktlayout oder durch die Fenster 7, keine Luft in die Aussparung dringen.

Wie es der Fig. 2 zu entnehmen ist, wird der starre Zentralbereich vom äußeren Bereich mechanisch weitgehend entkoppelt, was in dem gezeigten Ausführungsbeispiel durch im äußeren Bereich liegende Fenster 7 geschieht. Eine sehr gute Entkopplung ist gewährleistet, wenn die Fenster möglichst nah an dem Zentralbereich liegen.

Durch die Entkopplung der Bereiche wird erreicht, daß mechanische Belastungen, z.B. bei Biegungen des Datenträgers, die auf den äußeren Bereich einwirken, nur in geringem Maße auf den Zentralbereich übertragen werden. Dadurch wird z.B. der Gefahr vorgebeugt, daß sich im Zentralbereich die Gußmasse 15 und die Bonddrähte 11 von dem Kontaktlayout und den Kontaktflächen lösen.

Im Zusammenhang mit der Fig. 2 wurde ausgeführt, daß das elektronische Modul in die Aussparung eines bereitgestellten Datenträgers eingeklebt wird. Diese Einbautechnik wird allgemein als Montagetechnik bezeichnet. Selbstverständlich kann das Modul auch auf andere Art und Weise in den Kartenkörper des Datenträgers eingesetzt werden, z.B. durch Einbringen des Moduls in einen Schichtaufbau und Verbinden der Schichten unter der Einwirkung von Wärme und Druck (Laminiertechnik) oder durch Einbringen des Moduls in eine Spritzgußform und Erzeugen des Datenträgers durch Einspritzen von Kunststoffmaterial in den Formhohlraum der Gußform (Spritzgußtechnik).

Unabhängig davon, wie das Modul in den Datenträger eingesetzt wird, ist es besonders vorteilhaft, wenn die Entlastungsbereiche des Moduls (in der Fig. 2 als Fenster 7 ausgebildet) weitestgehend frei von Material des Datenträgers bleiben. Eine Füllung der Entlastungsbereiche mit Material aus dem Datenträger würde nämlich der mechanischen Entkopplung der beiden Bereiche des Moduls entgegenwirken.

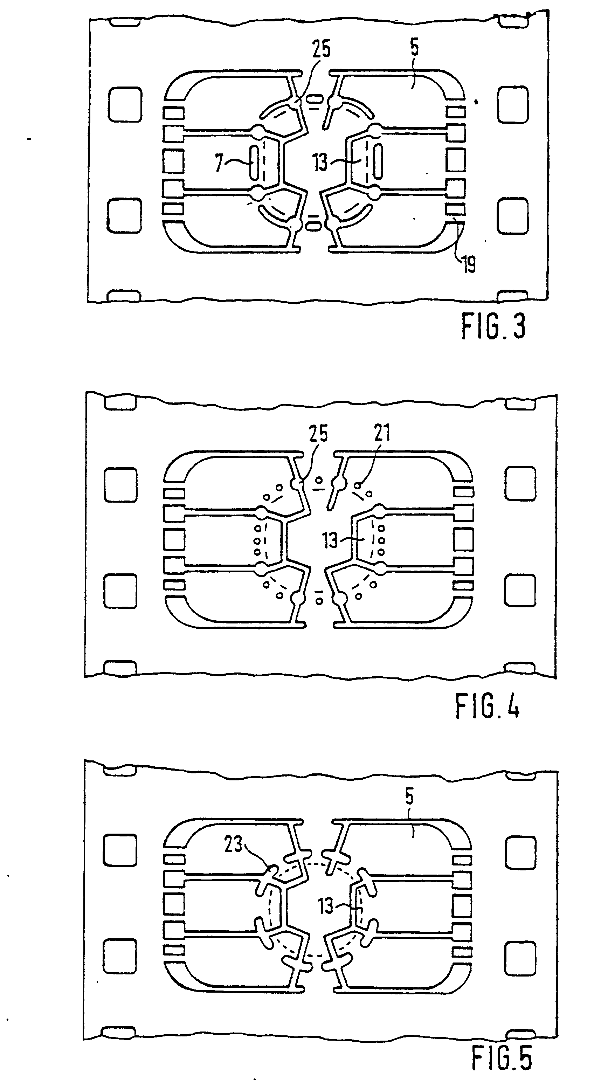

Die Fig. 3 bis 5 zeigen jeweils ein Metallband mit Kontaktlayout in Aufsicht.

In dem Metallband werden zunächst in äquidistanten Abständen Kontaktlayouts, z.B. durch Stanzen oder Ätzen etc. erzeugt, die zunächst über Stege 19 mit dem Metallband verbunden bleiben. Das Kontaktlayout wird vorzugsweise so ausgestaltet, daß der Teil 13 der Kontaktflächen 5, der beim fertiggestellten Modul im Zentralbereich auf der Gußmasse liegt, möglichst großflächig ist, so daß ein guter Verbund zwischen diesem Teil der Kontaktflächen und der Gußmasse gewährleistet ist. Gleichzeitig mit der Erzeugung des Kontaktlayouts oder in einem separaten Verfahrensschritt wird die Querschnittsfläche der Kontaktflächen 5 im äußeren Bereich verringert. Dies geschieht vorzugsweise in unmittelbarer Nähe des Zentralbereichs, der in den Fig. 3 bis 5 strichliert angedeutet ist, da dann eine besonders gute mechanische Entkopplung der Bereiche erreicht wird. Bei dem in der Fig. 3 gezeigten Kontaktlayout wird die Querschnittfläche durch die Einbringung von Fenstern 7 in die Kontaktflächen 5 verringert, die bereits im Zusammenhang mit den Fig. 1 und 2 erläutert worden sind. Bei dem in der Fig. 4 gezeigten Kontaktlayout wird der entsprechende Bereich perforiert, wie es durch die Perforationslöcher 21 angedeutet ist. Bei dem in der Fig. 5 gezeigten Kontaktlayout wird die Querschnittsfläche durch Buchten 23 verringert, die sich von den Unterbrechungen zwischen den Kontaktflächen 5 in diese erstrekken, so daß zwischen dem äußeren Teil und dem Teil 13 der Kontaktflächen, der im Zentralbereich liegt, nur ein schmaler Steg verbleibt.

Sowohl durch die Fenster als auch durch die Perforationen bwz. die Buchten wird eine mechanische Entkopplung des äußeren Bereichs vom Zentralbereich erreicht. Die Aufzählung der Ausführungsbeispiele ist nicht abschließend, vielmehr sind noch andere Möglichkeiten der Entkopplung denkbar, ohne das erfindungsgemäße Prinzip zu verlassen.

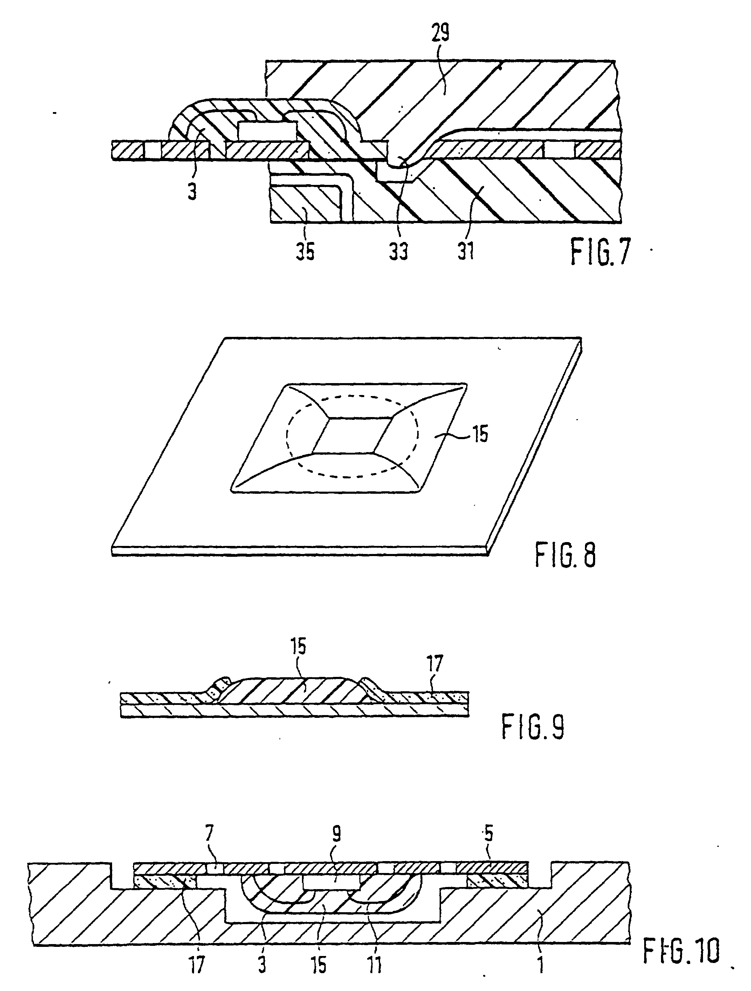

Die Fig. 3 und 4 zeigen neben den Fenstern 7 bzw. neben den Perforationen 21 noch zusätzliche Fenster 25, die nicht unbedingt vorhanden sein müssen und deren Funktion in Zusammenhang mit der Fig. 7 erläutert wird.

Fig. 6 zeigt einen Querschnitt entlang der in der Fig. 1 gezeigten Linie A - A durch einen Datenträger mit einem erfindunggemäßen Leadframe-Modul, wobei der Datenträger einer Biegebelastung ausgesetzt ist. Um die Entkopplung zwischen dem starren Zentralbereich und dem äußeren Bereich nochmals zu verbessern, kann die Klebeschicht 17 flexibel ausgebildet sein. Dies läßt sich z.B. durch ein Papiervlies, das mit thermoaktivierbarem Kleber getränkt ist, realisieren. Die Flexibilität der Klebeschicht 17 führt dazu, daß an der Schulter 27 angreifende Biegekräfte von der Klebeschicht 17 absorbiert werden, was zu einer Verscherung der Klebeschicht 17 führt, wie es in der Fig. 6 angedeutet ist. Somit wird der Zentralbereich des Moduls zusätzlich entlastet.

Es gibt jedoch auch eine Reihe von anderen Möglichkeiten, wie die Klebeschicht 17 flexibel ausgebildet werden kann. So kann es sich bei der Klebeschicht 17 um eine Schicht aus flexiblem Material handeln, die mit einem Klebstoff (z. B. Haftkleber oder thermoaktivierbarer Kleber) getränkt ist. Bei dem flexiblen Material kann es sich beispielsweise um ein Papiervlies oder aber um Polyurethanschaum handeln.

Zusätzlich kann die Klebeschicht 17 neben der Schicht flexiblen Materials, die mit dem Klebstoff getränkt ist, eine zweite Schicht, bestehend aus einem zweiten Klebstoff, aufweisen. Der erste und der zweite Klebstoff sind dann so gewählt, daß einer von beiden sich optimal mit dem elektronischen Modul verbindet und der andere sich optimal mit dem Datenträger verbindet.

Eine solche zweischichtige Klebeschicht 17 könnte beispielsweise wie folgt aussehen. Die aus flexiblem Material bestehende Schicht ist mit einem Haftkleber getränkt. Auf dieser Schicht ist eine zusätzliche Schicht aus thermoaktivierbaren Kleber angeordnet, die über den Haftkleber der ersten Schicht mit der ersten Schicht verklebt ist. Die so ausgeführte zweischichtige Klebeschicht 17 ist derart im Datenträger angeordnet, daß die haftklebergetränkte Schicht aus flexiblem Material mit dem Datenträger verklebt ist, während die Schicht aus thermoaktivierbaren Kleber mit den Kontaktflächen 5 des elektronischen Moduls verklebt ist.

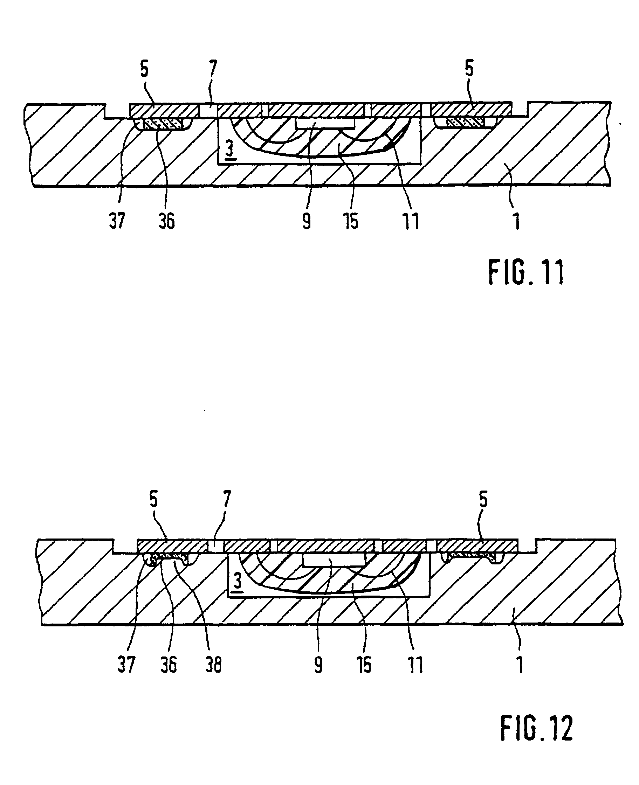

Eine zusätzliche Entlastung des Zentralbereichs kann auch dadurch erreicht werden, daß die Entlastungsbereiche des elektronischen Moduls (also die Bereiche, in denen die Fenster 7, Perforationen etc. liegen) nicht von einer Klebeschicht unterlegt sind. Dies kann beispielsweise dadurch realisiert werden, daß man in die Klebeschicht 17 ein so großes Fenster erzeugt, daß in diesem sowohl der Zentralbereich des elektronischen Moduls als auch die Entlastungsbereiche liegen, wie es in Fig. 10 gezeigt ist. Selbstverständlich kann eine derart vorbereitete Klebeschicht auch flexibel ausgestaltet sein.

Fig. 7 zeigt ein elektronisches Modul 3 in einer Gußform, die aus zwei Hälften 29 und 31 besteht. Dort wird das Modul 3 mit einer Gußmasse umgossen, was entweder durch Gießen oder aber auch durch Spritzgießen geschehen kann. Um zu verhindern, daß beim Gießvorgang Gußmasse durch die Unterbrechungen im Kontaktlayout aus dem Formraum der Gußform austritt, enthält die Gußformhälfte 29 Vorsprünge 33, die in die zusätzlichen Fenster 25 (siehe z.B. Fig. 3) eingreifen und den Formraum entsprechend abdichten. Zusätzlich kann in die Gußformhälfte 31 ein Magnet 35 eingebracht werden, der vor dem Gießvorgang aktiviert wird und das Kontaktlayout, das in diesem Fall aus einem magnetischen Metall besteht oder aber mit einem magnetischen Material beschichtet ist, anzieht und dessen Planlage gegen die Wand der Gußformhälfte 31 verbessert. Auf diese Weise kann weitestgehend verhindert werden, daß Gußmasse durch die Unterbrechungen im Kontaktlayout auf die dem Schaltkreis 9 gegenüberliegende Seite des Kontaktlayouts dringt und die außenliegenden Kontaktflächen verunreinigt.

Zusätzlich oder alternativ ist es auch möglich, die außenliegenden Kontaktflächen vor dem Gießvorgang zum Schutz vor Verunreinigungen mit einer Folie abzudecken und diese nachher wieder abzuziehen.

Sollten die außenliegenden Kontaktflächen fertigungsbedingt dennoch verunreinigt sein, so können diese selbstverständlich auch schonend gereinigt werden.

Die Fig. 11 zeigt eine Weiterbildung des Datenträgers gemäß Fig. 1, 2, 6 und 10 im Schnitt. Der Unterschied des Datenträgers gemäß Fig. 11 gegenüber dem Datenträger der Fig. 1, 2, 6 und 10 ist im wesentlichen darin zu sehen, daß das elektronische Modul 3 über einen Flüssigkleber 36 mit dem Datenträger 1 verklebt ist. Um beim Verkleben des elektronischen Moduls 3 mit dem Datenträger 1 ein Ausdehnen des Flüssigklebers über die Konturen der Kontaktflächen 5 hinaus zu verhindern, weist der Datenträger Mittel in Form von Vertiefungen 37 auf, die sich jeweils innerhalb der Kontur der einzelnen Kontaktflächen 5 befinden und die damit eine rundumlaufende Umwandung aufweisen. Zum Verkleben des elektronischen Moduls 3 mit dem Datenträger wird in die Vertiefungen 37, ein Tropfen Flüssigkleber 36 eingefüllt und dann das Modul 3 in die Aussparung des Datenträgers 1 eingesetzt. Bedingt durch die Vertiefungen 37 kann der Kleber nicht entweichen.

Fig. 12 zeigt eine Weiterbildung des Datenträgers gemäß Fig. 11 im Schnitt. Der Datenträger unterscheidet sich gegenüber dem der Fig. 11 darin, daß die Vertiefungen 37 zusätzliche Erhöhungen 38 in einem inneren Bereich aufweisen. Hierdurch kann erreicht werden, daß das elektronische Modul 3 und der Datenträger 1 über einen dünnen Film des Flüssigklebers 36 verklebt sind, so daß zwischen dem Modul und dem Datenträger eine bessere Klebewirkung erzielt wird. Der überschüssige Kleber kann hierbei in den Kanal abfließen, der zwischen den Vertiefungen 37 und den Erhöhungen 38 entsteht.

Abschließend sei erwähnt, daß es besonders vorteilhaft ist, die Gußmasse 15 in ihrer Form "ballig" auszubilden, wie es in der Figur 8 angedeutet ist, da in diesem Fall der äußere Bereich des elektronischen Moduls mit einer Klebeschicht 17 versehen werden kann, die ein rundes Fenster aufweist und zum Teil auf die Gußmasse ragt, wie es in Fig. 9 gezeigt ist. Durch eine auf die Gußmasse ragende Klebeschicht wird eine großflächige Verklebung des Moduls im Datenträger ermöglicht, wie es auch in der Fig. 2 und 6 bereits gezeigt ist. Weitere Vorteile einer derart ausgebildeten Klebeschicht sind der EP 0 493 738 A1 zu entnehmen.

## Patentansprüche

1. Elektronisches Modul mit einer Metallschicht, in der durch Unterbrechungen ein Kontaktlayout mit voneinander isolierten Kontaktflächen ausgebildet ist, wobei das Layout die Metallschicht in zwei Bereiche gliedert, nämlich einen Zentralbereich (13), in dem ein integrierter Schaltkreis (9) und leitende Verbindungen (11) vom Schaltkreis (9) zu den Kontaktflächen (5) liegen, wobei der Schaltkreis (9) und die Verbindungen (11) von einer Gußmasse (15) umgeben sind, sowie einen äußeren Bereich (5), der weitgehend frei von Gußmasse (15) ist, dadurch **gekennzeichnet,** daß
die Metallschicht im Übergang zwischen dem Zentralbereich (13) und dem äußeren Bereich (5) Entlastungsbereiche (7, 21, 23) aufweist, welche frei oder zumindest weitgehend frei von Modulmaterial sind und die dabei so gestaltet sind, daß Zentralbereich (13) und äußerer Bereich (5) mechanisch weitgehend voneinander entkoppelt werden, so daß auf den äußeren Bereich (5) einwirkende mechanische Belastungen nicht in vollem Maße auf den Zentralbereich (13) übertragen werden.

2. Elektronisches Modul nach Anspruch 1, dadurch **gekennzeichnet,** daß zur Ausbildung von Entlastungsbereichen die Querschnittsfläche der im äußeren Bereich liegenden Kontaktflächen in der Nähe des Zentralbereiches (13) entlang einer um den Zentralbereich (13) herumgeführten Linienführung verkleinert ist.

3. Elektronisches Modul nach Anspruch 2, dadurch **gekennzeichnet,** daß die Verkleinerung der Querschnittsfläche durch Unterbrechungen nach Art von Fenstern (7) bewirkt ist, welche Teil des Kontaktlayoutes sind.

4. Elektronisches Modul nach Anspruch 2, dadurch **gekennzeichnet,** daß die Querschnittsfläche durch in den Kontaktflächen liegende Perforationen (21) verkleinert ist.

5. Elektronisches Modul nach Anspruch 2, dadurch **gekennzeichnet,** daß die Querschnittsfläche durch Buchten (23), die ausgehend von den zwischen den Kontaktflächen liegenden Unterbrechungen in die Kontaktflächen ragen, verringert ist.

6. Elektronisches Modul nach einem der Ansprüche 1 bis 5, dadurch **gekennzeichnet,** daß zumindest der Zentralbereich (13) des Kontaktlayouts vorbehandelt ist, so daß der Verbund zwischen der Gußmasse (15) und dem Metall des Kontaktlayouts verbessert ist.

7. Elektronisches Modul nach einem der Ansprüche 1 bis 6, dadurch **gekennzeichnet,** daß die Gußmasse (15) im Zentralbereich (13) ballig ausgebildet ist.

8. Datenträger mit einem elektronischen Modul (3), das gemäß dem Anspruch 1 ausgebildet ist.

9. Datenträger nach Anspruch 8, dadurch **gekennzeichnet,** daß zumindest die Entlastungsbereiche (7, 21, 23) des elektronischen Moduls (3) weitgehend frei von Material des Datenträgers sind.

10. Datenträger nach Anspruch 9, dadurch **gekennzeichnet,** daß das elektronische Modul (3) mit einem flexiblen Kleber (17) in eine Aussparung des Datenträgers (1) eingeklebt ist.

11. Datenträger nach Anspruch 10, dadurch **gekennzeichnet,** daß der flexible Kleber (17) aus einer Schicht flexiblen Materials besteht, das mit Klebstoff getränkt ist.

12. Datenträger nach Anspruch 11, dadurch **gekennzeichnet,** daß der flexible Kleber (17) neben der Schicht flexiblen Materials mit dem ersten Klebstoff zusätzlich eine zweite Schicht, bestehend aus einem zweiten Klebstoff, aufweist, wobei einer von beiden Klebstoffen sich gut mit dem elektronischen Modul (3) verbindet und der andere sich gut mit dem Datenträger (1) verbindet.

13. Datenträger nach Anspruch 9, dadurch **gekennzeichnet,** daß das elektronische Modul (3) über einen Flüssigkleber (36) in eine Aussparung des Datenträgers (1) eingeklebt ist, wobei im Datenträger Mittel (37) vorgesehen sind, die die Ausdehnung des Flüssigklebers (17) beim Verkleben über die Konturen der einzelnen Kontaktflächen (5) des elektronischen Moduls (3) hinaus verhindern.

14. Datenträger nach Anspruch 13, dadurch **gekennzeichnet,** daß die Mittel Vertiefungen (37) im Datenträger (1) sind, die sich jeweils innerhalb der Kontur der einzelnen Kontaktflächen (5) befinden.

15. Datenträger nach Anspruch 14, dadurch **gekennzeichnet,** daß die Vertiefungen (37) zusätzlich in einem inneren Bereich eine Erhöhung (38) aufweisen, so daß das elektronische Modul (3) und der Datenträer (1) über einen dünnen Film des Flüssigklebers miteinander verklebt sind und der überschüssige Kleber in den Kanal abfließen kann, der zwischen der Vertiefung und der Erhöhung entsteht.

16. Verfahren zur Herstellung eines elektronischen Moduls nach Anspruch 1 in folgenden Verfahrensschritten:
- Bereitstellen eines Metallbandes, in dem durch Unterbrechungen ein Kontaktlayout mit Kontaktflächen (5) für jeweils ein Modul (3) ausgebildet wird, das zunächst über Stege mit dem Metallband verbunden bleibt
- Versehen des Zentralbereichs (13) des Kontaktlayouts mit einem integrierten Schaltkreis (9),
- Erstellen von leitenden Verbindungen (11) vom integrierten Schaltkreis (9) zu den Kontaktflächen (5),
- Einbringen des integrierten Schaltkreises (9) und der leitenden Verbindungen (11) in eine Gußform,
- Schließen der Gußform derart, daß die äußeren Bereiche der Kontaktflächen (5) zwischen den Gußformhälften eingeklemmt sind,
- Ausfüllen des Formraumes der Gußform mit einer Gußmasse (15),
dadurch **gekennzeichnet,** daß in dem Metallband zusätzlich zu dem Kontaktlayout Entlastungsbereiche (7,21,23) hergestellt werden, die frei oder zumindest weitgehend frei von Modulmaterial sind und beim fertiggestellten Modul (3) den Zentralbereich (13) vom Außenbereich (5) mechanisch weitgehend entkoppeln.

17. Verfahren zur Herstellung eines elektronischen Moduls nach Anspruch 16, dadurch **gekennzeichnet,** daß die Entlastungsbereiche (7, 21, 23) im Kontaktlayout gleichzeitig mit der Erstellung des Kontaktlayouts erzeugt werden.

18. Verfahren zur Herstellung eines elektronischen Moduls nach Anspruch 16, dadurch **gekennzeichnet,** daß die Entlastungsbereiche (7, 21, 23) im Kontaktlayout nach dem Vergießen des Zentralbereichs (13) erstellt werden.

19. Verfahren zur Herstellung eines elektronischen Moduls nach einem der Ansprüche 16 bis 17, dadurch **gekennzeichnet,** daß das Kontaktlayout durch Stanzen erzeugt wird und gleichzeitig in die Kontaktflächen Fenster (7), Perforationen (21) etc. eingestanzt werden.

20. Verfahren nach einem der Ansprüche 16 bis 19, dadurch **gekennzeichnet,** daß zumindest der Zentralbereich (13) des Kontaktlayouts derartig vorbehandelt wird, daß sich der Verbund zwischen der aufgebrachten Gußmasse (15) und dem Metall des Kontaktlayouts verbessert

21. Verfahren zur Herstellung eines elektronischen Moduls nach Anspruch 20, dadurch **gekennzeichnet,** daß die Vorbehandlung mit Plasma erfolgt.

22. Verfahren zur Herstellung eines elektronischen Moduls nach Anspruch 20, dadurch **gekennzeichnet,** daß die Vorbehandlung mit Sandstrahlen erfolgt.

23. Verfahren zur Herstellung eines elektronischen Moduls nach Anspruch 16, dadurch **gekennzeichnet,** daß eine der Gußformhälften (29) Vorsprünge (33) aufweist, die beim Schließen der Gußform in die Unterbrechungen im Kontaktlayout eingreifen und den Formraum somit abdichten.

24. Verfahren zur Herstellung eines elektronischen Moduls nach einem der Ansprüche 16 bis 23, dadurch **gekennzeichnet,** daß der in dem Formraum der Gußform liegende Teil des Metallbandes gegen die Wand des Formraums gepreßt wird, um ein Übertreten der Gußmasse auf die an der Wand anliegende Oberfläche des Metallbandes zu verhindern.

25. Verfahren nach Anspruch 24, dadurch **gekennzeichnet,** daß das Gegenpressen durch einen in der Gußform angeordneten Magneten (35) erfolgt, der das Metallband anzieht.

## Claims

1. An electronic module having a metal layer in which a contact layout with mutually insulated contact surfaces is formed by interruptions, the layout dividing the metal layer into two areas, namely a central area (13) containing an integrated circuit (9) and conductive connections (11) from the circuit (9) to the contact surfaces (5), the circuit (9) and connections (11) being surrounded by a casting compound (15), and an outer area (5) largely free from casting compound (15), characterized in that the metal layer has relieving areas (7, 21, 23) in the transition between the central area (13) and the outer area (5) which are free or at least largely free from module material and designed such that central area (13) and outer area (5) are largely decoupled mechanically from each other so that mechanical loads acting on the outer area (5) are not transmitted to the central area (13) to the full extent.

2. The electronic module of claim 1, characterized in that the cross-sectional area of the contact surfaces located in the outer area is reduced in the vicinity of the central area (13) along a line guided around the central area (13) to form relieving areas.

3. The electronic module of claim 2, characterized in that the cross-sectional area is reduced by interruptions in the manner of windows (7) which are part of the contact layout.

4. The electronic module of claim 2, characterized in that the cross-sectional area is reduced by perforations (21) located in the contact surfaces.

5. The electronic module of claim 2, characterized in that the cross-sectional area is reduced by indentations (23) protruding into the contact surfaces from the interruptions located between the contact surfaces.

6. The electronic module of any of claims 1 to 5, characterized in that at least the central area (13) of the contact layout is pretreated so as to improve the bond between the casting compound (15) and the contact layout metal.

7. The electronic module of any of claims 1 to 6, characterized in that the casting compound (15) has a crowned form in the central area (13).

8. A data carrier having an electronic module (3) designed according to claim 1.

9. The data carrier of claim 8, characterized in that at least the relieving areas (7, 21, 23) of the electronic module (3) are largely free from data carrier material.

10. The data carrier of claim 9, characterized in that the electronic module (3) is glued into a gap in the data carrier (1) with a flexible adhesive (17).

11. The data carrier of claim 10, characterized in that the flexible adhesive (17) consists of a layer of flexible material impregnated with adhesive.

12. The data carrier of claim 11, characterized in that the flexible adhesive (17) has, in addition to the layer of flexible material with the first adhesive, a second layer consisting of a second adhesive, whereby one of the adhesives connects well with the electronic module (3) and the other connects well with the data carrier (1).

13. The data carrier of claim 9, characterized in that the electronic module (3) is glued into a gap in the data carrier (1) by a liquid adhesive (36), means (37) being provided in the data carrier for preventing the liquid adhesive (17) from spreading beyond the contours of the individual contact surfaces (5) of the electronic module (3) during gluing.

14. The data carrier of claim 13, characterized in that the means are depressions (37) in the data carrier (1) which are each located within the contours of the individual contact surfaces (5).

15. The data carrier of claim 14, characterized in that the depressions (37) additionally have a bump (38) in an inner area, so that the electronic module (3) and data carrier (1) are glued together by a thin film of liquid adhesive, and the surplus adhesive can flow off into the channel arising between the depression and the bump.

16. A method for producing the electronic module of claim 1 in the following method steps:
- providing a metal band in which a contact layout with contact surfaces (5) for one module (3) each is formed by interruptions, said layout initially remaining connected with the metal band by bars,
- providing the central area (13) of the contact layout with an integrated circuit (9),
- producing conductive connections (11) from the integrated circuit (9) to the contact surfaces (5),
- introducing the integrated circuit (9) and conductive connections (11) into a casting mold,
- closing the casting mold in such a way that the outer areas of the contact surfaces (5) are clamped between the mold halves,
- filling the cavity of the casting mold with a casting compound (15),
characterized in that relieving areas (7, 21, 23) are produced in the metal band in addition to the contact layout which are free or at least largely free from module material and largely decouple mechanically the central area (13) from the outside area (5) when the module (3) is completed.

17. The method for producing an electronic module of claim 16, characterized in that the relieving areas (7, 21, 23) are produced in the contact layout simultaneously with the production of the contact layout.

18. The method for producing an electronic module of claim 16, characterized in that the relieving areas (7, 21, 23) in the contact layout are produced after the casting of the central area (13).

19. The method for producing an electronic module of either of claims 16 and 17, characterized in that the contact layout is produced by punching, and windows (7), perforations (21), etc., are simultaneously punched into the contact surfaces.

20. The method of any of claims 16 to 19, characterized in that at least the central area (13) of the contact layout is pretreated so as to improve the bond between the applied casting compound (15) and the contact layout metal.

21. The method for producing an electronic module of claim 20, characterized in that the pretreatment is done with plasma.

22. The method for producing an electronic module of claim 20, characterized in that the pretreatment is done by sandblasting.

23. The method for producing an electronic module of claim 16, characterized in that one of the casting mold halves (29) has projections (33) which engage the interruptions in the contact layout and thereby seal the mold cavity when the mold is closed.

24. The method for producing an electronic module of any of claims 16 to 23, characterized in that the part of the metal band located in the cavity of the casting mold is pressed against the wall of the cavity to prevent the casting compound from overflowing onto the surface of the metal band lying against the wall.

25. The method of claim 24, characterized in that the counterpressing is done by a magnet (35) disposed in the casting mold and attracting the metal band.

## Revendications

1. Module électronique avec une couche métallique dans laquelle un tracé de contact est formé par des interruptions avec des surfaces de contact isolées les unes des autres, le tracé de contact divisant la couche métallique en deux zones, à savoir une zone centrale (13), dans laquelle se trouve un circuit de commutation intégré et des liaisons (11) conductrices depuis le circuit de commutation (9) vers les surfaces de contact (5), le circuit de commutation (9) et les liaisons (11) étant entourées d'une masse moulée (15), ainsi qu'une zone (5) externe, qui est en grande partie libre de la masse moulée (15),
caractérisé en ce que :
la couche métallique comporte à la transition entre la zone centrale (13) et la zone externe (5), des zones de décharge (7, 21, 23) qui sont libres ou au moins en grande partie libres du matériau du module et qui sont formées de telle sorte que la zone centrale (13) et la zone externe (5) soient mécaniquement en grande partie découplées les unes des autres, de manière que, sur la zone externe (5), les charges agissant mécaniquement ne soient pas transmises pleinement à la zone centrale (13).

2. Module électronique selon la revendication 1, caractérisé en ce que, pour la formation de zones de décharge, la surface de section transversale des surfaces de contact situées dans la zone externe est réduite à proximité de la zone centrale (13) le long d'un tracé de ligne entourant la zone centrale (13).

3. Module électronique selon la revendication 2, caractérisé en ce que la réduction de la surface de section transversale par interruptions est réalisée par des genres de fenêtres (7) qui font partie du tracé de contact.

4. Module électronique selon la revendication 2, caractérisé en ce que la surface de section transversale est réduite par des perforations (21) situées dans les surfaces de contact.

5. Module électronique selon la revendication 2, caractérisé en ce que la surface de section est réduite par des anses (23), qui s'étendent dans les surfaces de contact à partir des interruptions situées entre les surfaces de contact.

6. Module électronique selon l'une des revendications 1 à 5, caractérisé en ce que au moins la zone centrale (13) du tracé de contact est traitée initialement, de telle sorte que la liaison entre la masse moulée (15) et le métal du tracé de contact soit améliorée.

7. Module électronique selon l'une des revendications 1 à 6, caractérisé en ce que la masse moulée (15) dans la zone centrale (13) est réalisée de manière bombée.

8. Support de données avec un module électronique (3), qui est formé selon la revendication 1.

9. Support de données selon la revendication 8, caractérisé en ce que au moins les zones de décharge (7, 21, 23) du module électronique (3) sont en grande partie libres du matériau du support de données.

10. Support de données selon la revendication 9, caractérisé en ce que le module électronique (3) est collé avec une colle flexible (17) dans un évidement du support de données (1).

11. Support de données selon la revendication 10, caractérisé en ce que la colle flexible (17) consiste en une couche de matériau flexible, qui est imprégnée d'adhésif.

12. Support de données selon la revendication 11, caractérisé en ce que la colle flexible (17) présente, à côté de la couche de matériau flexible avec le premier adhésif, en plus une deuxième couche, consistant en un deuxième adhésif, l'un des deux adhésifs se liant bien avec le module électronique (3) et l'autre se liant bien avec le support de données (1).

13. Support de données selon la revendication 9, caractérisé en ce que le module électronique (3) est collé au-dessus d'une colle liquide (36) dans un évidement du support de données (1), des moyens (37) étant prévus dans le support de données pour empêcher, lors du collage, le débordement de la colle liquide (17) par dessus les contours des surfaces de contact individuelles (5) du module électronique (3).

14. Support de données selon la revendication 13, caractérisé en ce que les moyens sont des creux (37) dans le support de données (1) qui se trouvent chacun à l'intérieur du contour des surfaces de contact individuelles (5).

15. Support de données selon la revendication 14, caractérisé en ce que les creux (37) présentent en plus dans une zone interne un exhaussement (38) de telle sorte que le module électronique (3) et le support de données (1) soient collés ensemble par un film mince de colle liquide et que la colle en excès puisse s'écouler dans le canal qui se trouve entre le creux et l'exhaussement.

16. Procédé pour la fabrication d'un module électronique selon la revendication 1, comprenant les étapes suivantes :
- préparation d'une bande de métal dans laquelle, est formée par des interruptions, un tracé de contact avec des surfaces de contact (5) pour chaque module (3) qui reste par la suite relié avec la bande de métal par des barrettes ;
- garniture de la zone centrale (13) du tracé de contact avec un circuit de commutation intégré (9) ;
- établissement de liaisons (11) conductrices à partir du circuit de commutation intégré (9) vers les surfaces de contact (5) ;
- mise en place du circuit de commutation intégré (9) et des liaisons (11) conductrices dans un moule ;
- fermeture du moule de telle sorte que les zones extérieures des surfaces de contact (5) soient pincées entre les moitiés du moule ;
- remplissage de l'espace formé par le moule avec une masse moulée (15) ;
caractérisé en ce que sont fabriquées, dans la bande de métal en plus du tracé de contact, des zones de déchargement (7, 21, 23) qui sont libres ou au moins en grande partie libres du matériau du module et, qui pour le module (13) terminé, découplent mécaniquement en grande partie la zone centrale (13) de la zone externe (5).

17. Procédé pour fabriquer un module électronique selon la revendication 16, caractérisé en ce que les zones de décharge (7, 21, 23) sont créées dans le tracé de contact simultanément à l'établissement du tracé de contact.

18. Procédé pour fabriquer un module électronique selon la revendication 16, caractérisé en ce que les zones de décharge (7, 21, 23) sont établies sur le tracé de contact après la coulée de la zone centrale (13).

19. Procédé pour fabriquer un module électronique selon l'une des revendications 16 et 17, caractérisé en ce que le tracé de contact est fabriqué par poinçonnage et en même temps, les fenêtres (7), les perforations (21), etc.. sont poinçonnées dans les surfaces de contact.

20. Procédé selon l'une des revendications 16 à 19, caractérisé en ce que au moins la zone centrale (13) du tracé de contact est traitée initialement de sorte que la liaison entre la masse moulée (15) apportée et le métal du tracé de contact s'améliore.

21. Procédé pour fabriquer un module électronique selon la revendication 20, caractérisé en ce que le traitement est exécuté avec du plasma.

22. Procédé pour fabriquer un module électronique selon la revendication 20, caractérisé en ce que le traitement est exécuté par décapage au sable.

23. Procédé pour fabriquer un module électronique selon la revendication 16, caractérisé en ce que l'une des moitiés du moule (29) présente des parties en saillie (33), qui, lors de la fermeture du moule, viennent en prise dans les interruptions dans le tracé de contact et rendent ainsi étanche l'espace de moulage.

24. Procédé pour fabriquer un module électronique selon l'une quelconque des revendications 16 à 23, caractérisé en ce que la partie de la bande de métal se trouvant dans l'espace de moulage du moule est pressée contre la paroi de l'espace de moulage, pour éviter que la masse moulée dépasse sur la surface de la bande de métal adjacente à la paroi.

25. Procédé selon la revendication 24, caractérisé en ce que la contre-pression est réalisée par un barreau magnétique (35) agencé dans le moule, barreau magnétique qui attire la bande de métal.
